# EUROPEAN PATENT APPLICATION

(11) **EP 4 648 199 A1**
(43) Date of publication of application: **12.11.2025**
(21) Application number: 23917920.3
(22) Date of filing: 22.12.2023
(51) Int. Cl.: H01M 50/30, H01M 50/367, H01M 50/383, H01M 50/358, H01M 50/325, H01M 10/6556, H01M 10/613, H01M 50/204, H01M 50/249

(54) **BATTERY PACK AND VEHICLE COMPRISING SAME**

(30) Priority: 20.01.2023 KR 20230008989
(71) Applicant: LG Energy Solution, Ltd., Seoul 07335 (KR)
(72) Inventor: SEO, Sung-Won, Daejeon 34122 (KR); LEE, In-Je, Daejeon 34122 (KR)
(74) Representative: Hoffmann Eitle
(86) International application number: PCT/KR2023/021509
(87) International publication number: WO 2024/154968

(57) **Abstract**

A battery pack according to an aspect of the present disclosure includes: a plurality of battery cells; and a pack housing having an accommodation space configured to accommodate the plurality of battery cells, wherein the pack housing comprises: a side frame constituting a side wall of the accommodation space, having a gas passage therein, and having at least one window, which communicates with the gas passage, provided on a surface adjacent to the accommodation space; and a base frame constituting the bottom of the accommodation space and having at least one pocket configured to collect particles emitted from the plurality battery cells accommodated in the accommodation space.

## Description

The present application claims priority to Korean Patent Application No. 10-2023-0008989 filed on January 20, 2023 in the Republic of Korea, the disclosures of which are incorporated herein by reference.

### TECHNICAL FIELD

The present disclosure relates to a battery module, and a battery pack and a vehicle including the same, and more specifically, it relates to a battery pack having a plurality of battery cells capable of being charged and discharged, and a vehicle including the battery pack.

### BACKGROUND ART

In general, secondary batteries refer to batteries capable of being repeatedly charged and discharged, such as lithium-ion batteries, lithium-polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured by configuring a battery module by connecting a plurality of battery cells in series, parallel, or a combination thereof and reconnecting these battery modules in series, parallel, or a combination thereof, has been widely used.

However, as disclosed in Korean Unexamined Patent Publication No. 10-2022-0052183, according to the existing technology, a battery pack is manufactured by configuring a battery module by storing battery cells in a box-shaped metal case and then storing these battery modules in a battery pack case, but it causes problems of increasing the weight and volume of the entire battery pack and reducing the energy density of the battery pack.

In addition, according to the existing technology, since multiple battery cells are densely arranged in a limited inner space of the battery pack in order to increase the energy density of the battery pack, if venting gas is generated from one of the battery cells inside the battery pack, it is difficult to discharge the venting gas in an intended direction, and heat energy and ignition sources such as dust, ash, and the like emitted from the battery cells accumulate inside the battery pack, causing chain thermal runaway or ignition in other battery cells.

### DISCLOSURE

### Technical Problem

The present disclosure has been designed to solve the problems of the related art, and therefore the present disclosure is directed to providing a battery pack capable of preventing chain thermal runaway or ignition of battery cells accommodated therein while having high energy density due to a reduction in weight and volume, and a vehicle including the battery pack.

### Technical Solution

According to one aspect of the present disclosure, there is provided a battery pack including: a plurality of battery cells; and a pack housing having an accommodation space configured to accommodate the plurality of battery cells, wherein the pack housing includes: a side frame constituting a side wall of the accommodation space, having a gas passage therein, and having at least one window, which communicates with the gas passage, provided on a surface adjacent to the accommodation space; and a base frame constituting the bottom of the accommodation space and having at least one pocket configured to collect particles emitted from the plurality battery cells accommodated in the accommodation space.

In an embodiment, each of the plurality of battery cells may include an electrode lead at an end facing the side frame, and the at least one window of the side frame may be provided at a position facing the electrode lead.

In an embodiment, the at least one pocket of the base frame may be provided below the at least one window.

In an embodiment, the side frame may further have a guide surface configured to guide particles emitted from the plurality battery cells to the pocket.

In an embodiment, the pack housing may further include partitions configured to divide the accommodation space into a plurality of independent sub-accommodation spaces, and the side frame may include a plurality of windows corresponding to the plurality of sub-accommodation spaces.

In an embodiment, the base frame may include a plurality of pockets corresponding to the plurality of sub-accommodation spaces.

In an embodiment, the base frame may further include a cooling medium path through which a cooling medium moves.

In an embodiment, the side frame may further include a capture groove provided below the gas passage and configured to capture particles flowing into the gas passage through the at least one window.

In an embodiment, the side frame may further include a plurality of capturing fins protruding from the inner surface of the capture groove at regular intervals and configured to capture particles flowing into the gas passage.

In an embodiment, the plurality of capturing fins may protrude to be inclined in the direction of movement of venting gas, which is discharged from the plurality battery cells and moves along the gas passage.

In an embodiment, the side frame may further include a gas outlet configured to discharge venting gas moving along the gas passage to the outside of the pack housing.

In an embodiment, the pack housing may further include a gas valve configured to open the gas outlet if internal pressure of the gas passage is higher than external pressure of the battery pack and close the gas outlet if the internal pressure of the gas passage is equal to or lower than the external pressure.

A vehicle according to another aspect of the present disclosure may include the battery pack according to any one of the embodiments described above.

### Advantageous Effects

According to the present disclosure, since multiple battery cells capable of being charged and discharged are accommodated directly inside the pack housing of the battery pack, it is possible to reduce the weight and volume of the battery pack and improve the energy density thereof.

In addition, since the side frame of the pack housing has a gas passage therein, and since a window communicating with the gas passage is provided on one surface adjacent to the accommodation space accommodating the battery cells, it is possible to discharge the gas generated from the battery cells inside the accommodation space in the intended direction, thereby preventing chain thermal runaway or ignition of other battery cells and improving the safety of the battery pack.

In addition, the base frame of the pack housing has a pocket configured to collect particles such as dust and ash emitted from the battery cells accommodated in the accommodation space, thereby preventing obstruction of the gas passage or occurrence of fire due to the particles and further improving the safety of the battery pack.

In addition, since a capture groove is provided inside the side frame to capture particles flowing into the gas passage, it is possible to prevent high-temperature particles from being discharged outside the battery pack.

In addition, the base frame has a cooling medium path through which the cooling medium moves and constitutes the accommodation space, so that a heat sink separately installed inside the pack housing may be omitted, thereby simplifying the structure of the battery pack and reducing manufacturing costs.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a battery pack according to an embodiment of the present disclosure.
FIG. 2 is a diagram illustrating the internal structure of the battery pack shown in FIG. 1.
FIG. 3 is an exploded perspective view of the battery pack shown in FIG. 1.
FIG. 4 is a diagram illustrating a battery cell accommodated in a battery pack according to an embodiment of the present disclosure.
FIG. 5 is a diagram illustrating the side frame of the battery pack shown in FIG. 3.
FIG. 6 is a diagram illustrating a base frame of the battery pack shown in FIG. 3.
FIG. 7 is a cross-sectional view of the battery pack taken along line A-A' in FIG. 1.
FIG. 8 is a cross-sectional view of the battery pack taken along line B-B' in FIG. 1.
FIG. 9 is a cross-sectional view of the battery pack taken along line C-C' in FIG. 1.
FIG. 10 is a diagram illustrating a gas discharge portion of a battery pack according to a modified embodiment of the present disclosure.
FIG. 11 is a diagram illustrating the gas discharge state of the battery pack shown in FIG. 10.
FIG. 12 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

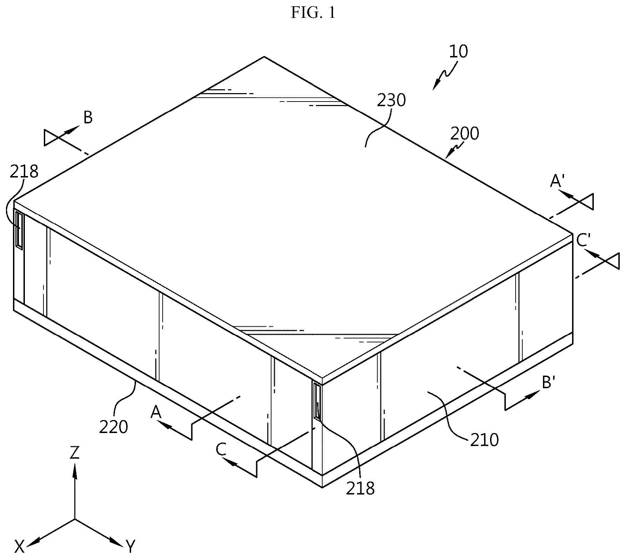

FIG. 1 is a perspective view illustrating a battery pack 10 according to an embodiment of the present disclosure.

As shown in FIG. 1, the battery pack 10 according to an embodiment of the present disclosure includes at least one battery cell capable of being charged and discharged, and a pack housing 200 that accommodates the battery cell.

In this case, the pack housing 200 may have an accommodation space for accommodating a plurality of battery cells. To this end, the pack housing 200 may include a side frame 210 constituting the side walls of the accommodation space, a base frame 220 constituting the bottom of the accommodation space, and a lid 230 covering the top of the accommodation space.

As will be explained below, the side frame 210 may have a gas passage therein and may have at least one window, which communicates with the gas passage, provided on one surface adjacent to the accommodation space.

In addition, the base frame 220 may include at least one pocket configured to collect particles emitted from the battery cells accommodated in the accommodation space.

The lid 230 may be configured to cover the top of the accommodation space to seal the accommodation space.

In an embodiment, a gas outlet 218 for discharging venting gas generated from the battery cells accommodated in the pack housing 200 to the outside of the pack housing 200 may be provided on the outer surface of the pack housing 200. For example, the gas outlet 218 may be provided on the outer surface of the side frame 210.

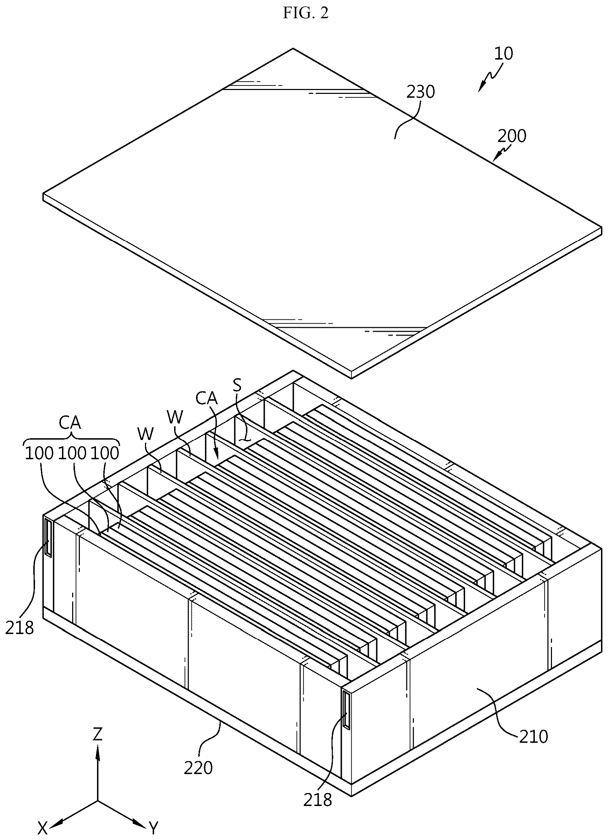

FIG. 2 illustrates the internal structure of the battery pack 10 shown in FIG. 1.

As shown in FIG. 2, the pack housing 200 of the battery pack 10 may be configured to have an accommodation space therein and accommodate a plurality of battery cells 100 in the accommodation space.

The plurality of battery cells 100 may be stacked on each other in one direction (the X-axis direction) to form a battery cell assembly CA.

The side frame 210 of the pack housing 200 may be configured to constitute the side perimeter of the accommodation space and discharge venting gas emitted from the battery cells 100 to the outside through the gas outlet 218.

The base frame 220 of the pack housing 200 may be configured to constitute the bottom of the accommodation space and support the battery cells accommodated in the accommodation space.

The lid 230 of the pack housing 200 may be configured to be coupled and fixed to the side frame 210 and cover the top of the accommodation space to seal the accommodation space.

In addition, the pack housing 200 may further include partitions W that divide the accommodation space into a plurality of independent sub-accommodation spaces S. In this case, one or more battery cells 100 may be accommodated in each sub-accommodation space S.

The pack housing 200 may be made of a material with mechanical rigidity and heat resistance. For example, the pack housing 200 may be made of metal, polymer synthetic resin, or a combination thereof.

Depending on the embodiment, the battery pack 10 may further include various electrical components (not shown) that control the charging and discharging operation of the battery cells accommodated inside the pack housing 200 or monitor SOC (State Of Charge), SOH (State Of Health), or the like. These electronical components may be accommodated in the pack housing 200 along with the battery cells.

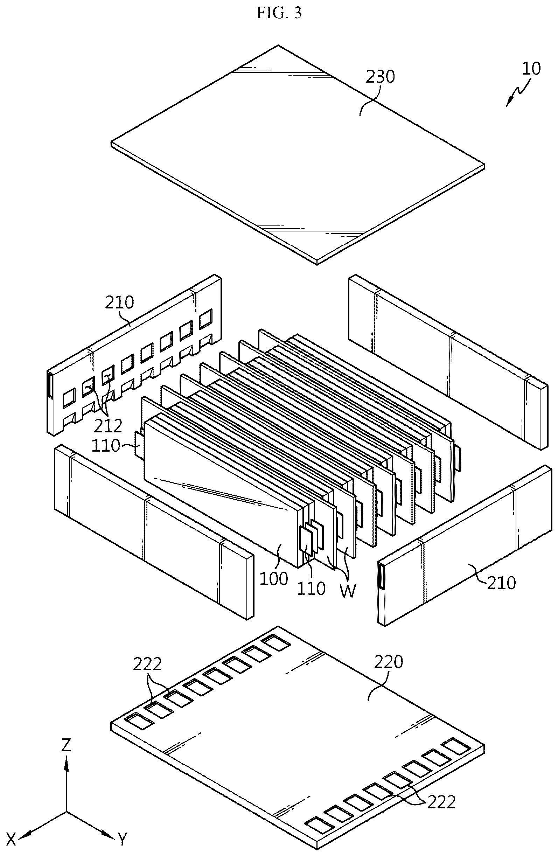

FIG. 3 is an exploded perspective view of the battery pack 10 shown in FIG. 1.

As shown in FIG. 3, each of the plurality of battery cells 100 accommodated in the battery pack 10 may have an electrode lead 110 at the end facing the side frame 210 in the side direction (the Y-axis direction).

The side frame 210 may have a gas passage therein. In addition, the side frame 210 may have at least one window 212, which communicates with the gas passage, provided on one surface adjacent to the accommodation space accommodating the battery cell 100. In this case, each window 212 may be provided at a position facing the electrode lead 110 of a corresponding battery cell 100.

The base frame 220 may have at least one pocket 222 configured to collect particles emitted from the battery cells accommodated in the accommodation space. In this case, each pocket 222 may be provided below a corresponding window 212.

The partitions W of the pack housing 200 may divide the accommodation space into a plurality of independent sub-accommodation spaces. In this case, the side frame 210 may have a plurality of windows 212 corresponding to the plurality of sub-accommodation spaces. In addition, the base frame 220 may have a plurality of pockets 222 corresponding to the plurality of sub-accommodation spaces.

As described above, the battery pack 10 has a plurality of battery cells 100 distributed to the independent sub-accommodation spaces, thereby primarily blocking thermal propagation between the battery cells.

In addition, the battery pack 10 may discharge high-temperature venting gas through the window 212 provided for each sub-accommodation space, and may collect and isolate particles, which are ignition sources, such as dust and ash, through the pocket 222 provided for each sub-accommodation space, thereby secondarily blocking heat propagation between the battery cells.

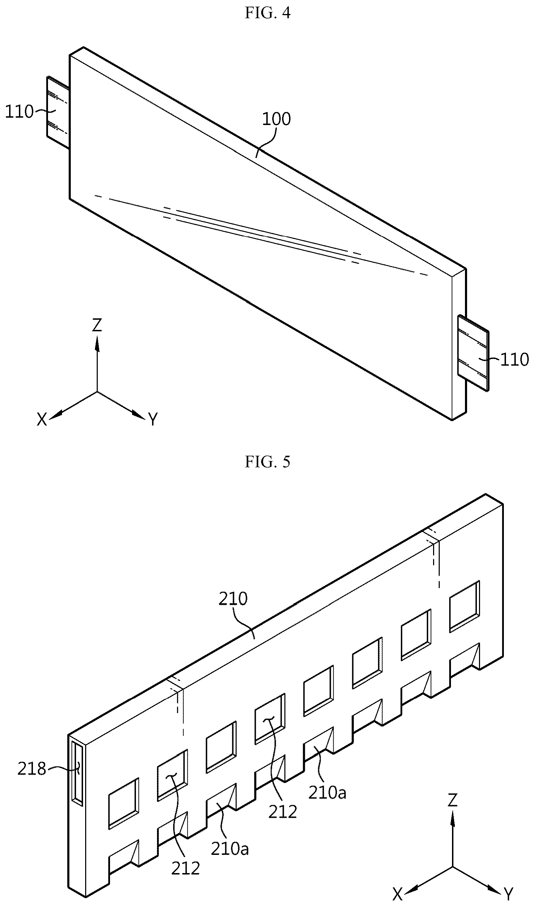

FIG. 4 illustrates the battery cell 100 accommodated in the battery pack according to an embodiment of the present disclosure.

As shown in FIG. 4, the battery cell 100 is a basic secondary battery capable of being charged and discharged, and may have electrode leads 110 at both ends facing the side frame 210 in the side direction (the Y-axis direction).

For example, the battery cell 100 may include a pouch-type secondary battery. In this case, the battery cell 100 may be manufactured by storing an electrode assembly, including positive electrodes and negative electrodes stacked with a separator therebetween, and an electrolyte material in a pouch-type case and by sealing the case. The electrode lead 110 may be electrically connected to the electrode assembly.

If gas is generated inside the battery cell 100, the gas may be discharged through the electrode lead portion, which is relatively vulnerable, among various portions of the battery cell 100. The gas discharged through the electrode lead portion as described above may flow into the gas passage through the above-described window 212 of the side frame 210, move along the gas passage, and exit to the outside of the pack housing 200 through the gas outlet 218.

FIG. 5 illustrates the side frame 210 of the battery pack shown in FIG. 3.

As shown in FIG. 5, the side frame 210 may have a gas passage therein and a window 212, which communicates with the gas passage, provided on one surface adjacent to the battery cell 100. In this case, the window 212 may be provided at a position facing the electrode lead 110 of the battery cell 100.

As mentioned earlier, the venting gas discharged through the electrode lead portion of the battery cell 100 may flow into the gas passage through the window 212 of the side frame 210, move along the gas passage, and then exit to the outside of the pack housing 200 through the gas outlet 218.

In addition, the side frame 210 may further have a guide surface 210a configured to guide particles emitted from the battery cell 100 to the pocket 222 of the base frame 220 provided below each window 212.

In this case, the side frame 210 may have a plurality of guide surfaces 210a respectively corresponding to a plurality of pockets 222 provided in the base frame 220.

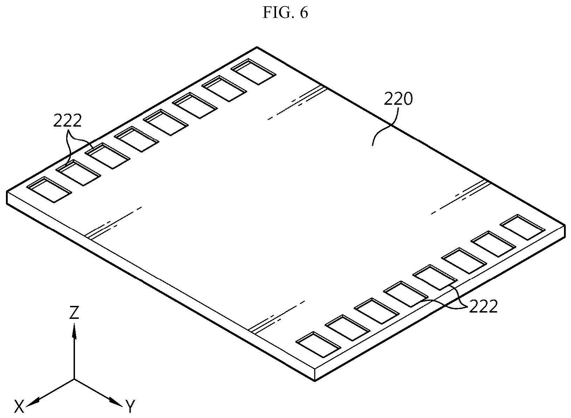

FIG. 6 illustrates the base frame 220 of the battery pack shown in FIG. 3.

As shown in FIG. 6, the base frame 220 may have a pocket 222 configured to collect particles emitted from the battery cell 100. In this case, the base frame 220 may have a plurality of pockets 222 corresponding to a plurality of sub-accommodation spaces divided by the partitions W of the pack housing 200.

As will be explained below, the base frame 220 may further include a cooling medium path through which the cooling medium moves. That is, the base frame 220 may be configured to perform both the role of a support structure that supports battery cells and the role of a heat sink that cools the battery cells.

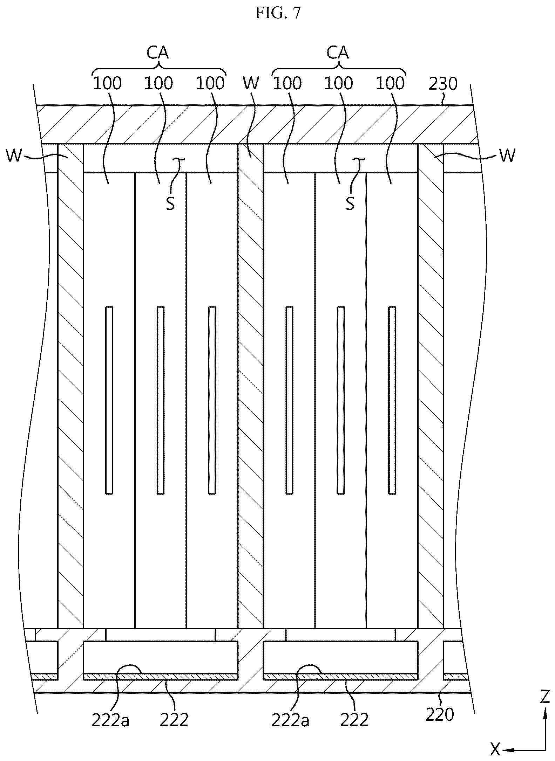

FIG. 7 is a cross-sectional view of the battery pack taken along line A-A' in FIG. 1.

As shown in FIG. 7, a battery cell assembly CA including a plurality of battery cells 100 stacked on each other may be accommodated in each sub-accommodation space S independently divided by the partitions W.

In addition, the pocket 222 of the base frame 220 provided at the bottom of each sub-accommodation space S may be configured to be concave in the direction of gravity (the -Z-axis direction). This pocket 222 may collect particles emitted from the battery cell 100 and falling by their own weight.

In an embodiment, the pocket 222 may have an adhesive layer 222a on its inner surface. In this case, the particles flowing into the pocket 222 may adhere to the adhesive layer 222a, thereby blocking the movement of the particles.

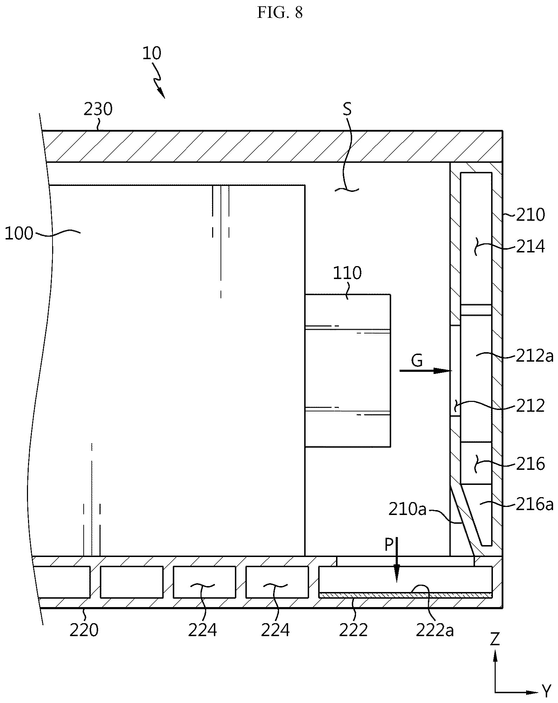

FIG. 8 is a cross-sectional view of the battery pack taken along line B-B' in FIG. 1.

As shown in FIG. 8, the battery pack 10 may have the window 212 and pocket 222 described above for each sub-accommodation space S. That is, venting gas G discharged around the electrode lead 110 of the battery cell 100 accommodated in each sub-accommodation space S may flow into the gas passage 214 in the side frame 210 through the window 212 of the side frame 210 provided at a position facing a corresponding electrode lead 110.

In addition, the particles emitted along with the venting gas G from the battery cell 100 may fall by their own weight to be received inside the pocket 222 of the base frame 220. In this case, the guide surface 210a of the side frame 210 may guide the particles to the pocket 222.

In an embodiment, an adhesive layer 222a may be provided on the inner surface of the pocket 222. In this case, the particles flowing into the pocket 222 may be attached and fixed to the adhesive layer 222a.

As mentioned above, the base frame 220 may have a cooling medium path 224 through which the cooling medium moves. The cooling medium moving through the cooling medium path 224 may absorb heat generated from the battery cells 100 and discharge the same to the outside.

As described above, the base frame 220 of the pack housing 200 is configured to perform both the role of a support structure that supports the battery cells and the role of a heat sink that cools the battery cells, thereby simplifying the structure of the battery pack and reducing manufacturing cost thereof.

Meanwhile, the side frame 210 may have a capture groove 216 that is provided below the gas passage 214 and captures particles flowing into the gas passage 214 through the window 212. That is, particles that fail to be received by the pocket 222 of the base frame 220 due to the pressure of venting gas G and enter the gas passage 214 through the window 212 may fall while colliding with the inner surface of the gas passage 214 to be captured by the capture groove 216 provided below the gas passage 214.

In an embodiment, the side frame 210 may further include a plurality of capturing fins 216a configured to protrude from the inner surface of the capture groove 216 at regular intervals and capture particles flowing into the gas passage.

In addition, in an embodiment, the side frame 210 may further include a blocking wall 212a provided between adjacent windows inside the gas passage 214. This blocking wall 212a may prevent the high-temperature venting gas G flowing into the gas passage 214 through the first window from exiting through the second window adjacent to the first window immediately after colliding with the inner surface of the gas passage 214.

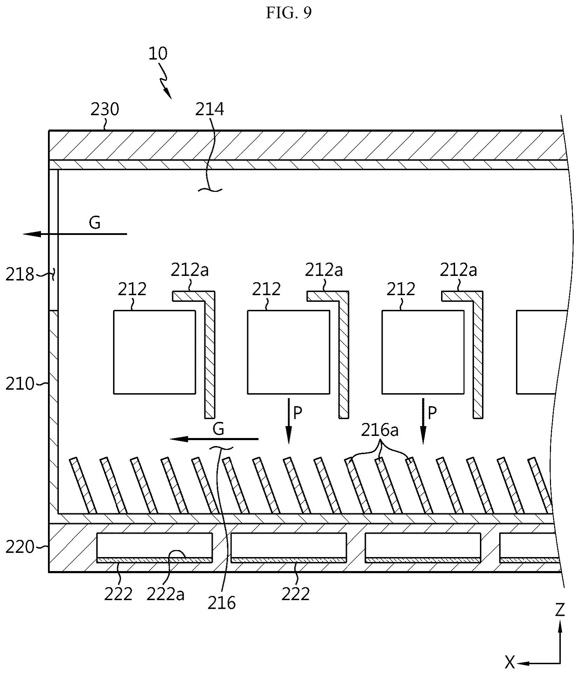

FIG. 9 is a cross-sectional view of the battery pack taken along line C-C' in FIG. 1.

As shown in FIG. 9, the venting gas G flowing into the gas passage 214 of the side frame 210 through the window 212 may move through the gas passage 214 and exit to the outside of the pack housing 200 through the gas outlet 218.

In this case, the blocking wall 212a provided between adjacent windows may prevent the high-temperature venting gas G flowing into the gas passage 214 through the first window from exiting through the second window adjacent to the first window immediately after colliding with the inner surface of the gas passage 214.

In addition, particles that fail to be received in the pocket 222 of the base frame 220 due to the pressure of venting gas G and enter the gas passage 214 through the window 212 may fall while colliding with the inner surface of the gas passage 214 to be captured by the capture groove 216 provided below the gas passage 214.

In an embodiment, the side frame 210 may further include a plurality of capturing fins 216a configured to protrude from the inner surface of the capture groove 216 at regular intervals and capture particles flowing into the gas passage. That is, the particles flowing into the gas passage 214 may fall to the capture groove 216 by their own weight and may be captured between the capturing fins.

In this case, the plurality of capturing fins 216a may be configured to protrude to be inclined in the direction of movement of the venting gas G, which is emitted from the battery cell and moves along the gas passage 214. As a result, the plurality of capturing fins 216a may facilitate the flow of venting gas G while capturing the particles falling from the gas passage 214, thereby suppressing turbulence inside the gas passage 214.

The capturing fin 216a may be made of a thermally conductive material. The capturing fin 216a made of thermally conductive material may also serve as a cooling fin that cools the venting gas G.

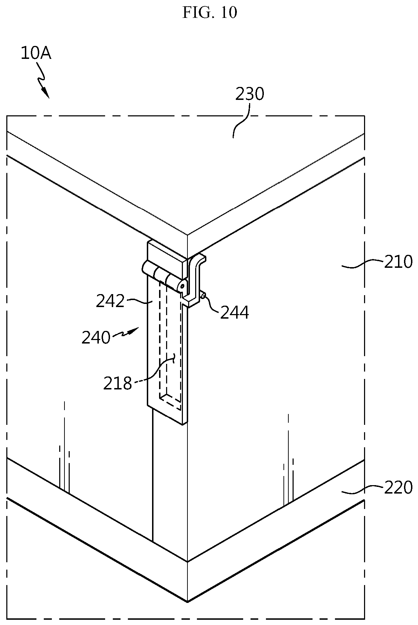

FIG. 10 is a diagram illustrating a gas discharge portion of a battery pack 10A according to a modified embodiment of the present disclosure.

As shown in FIG. 10, the battery pack 10A according to a modified embodiment of the present disclosure may include configurations corresponding to the configurations of the battery pack 10 described above.

That is, the pack housing of the battery pack 10A may include the above-described side frame 210, base frame 220, and lid 230, and in particular, may further include a gas valve 240 that opens and closes the gas outlet 218.

The gas valve 240 may be configured to open the gas outlet 218 if the internal pressure of the gas passage provided inside the side frame 210 is higher than the external pressure of the battery pack 10A, and close the gas outlet 218 if the internal pressure of the gas passage is equal to or lower than the external pressure of the battery pack 10A.

To this end, the gas valve 240 may include a swing door 242 configured to swing upward or downward to open or close the gas outlet 218 and a stopper 244 that limits the swing angle of the swing door 242.

For example, the swing door 242 may be configured to be supported by a hinge and rotate in the up and down directions. In this case, if the internal pressure of the gas passage is equal to or lower than the external pressure, the swing door 242 may come into close contact with the gas outlet 218 due to the weight of the swing door 242 or the pressure difference between the inside and outside of the gas outlet 218, thereby closing the gas outlet 218.

On the other hand, if the internal pressure of the gas passage is higher than the external pressure, the swing door 242 may swing upward by air or gas discharged from the gas outlet 218, thereby opening the gas outlet 218.

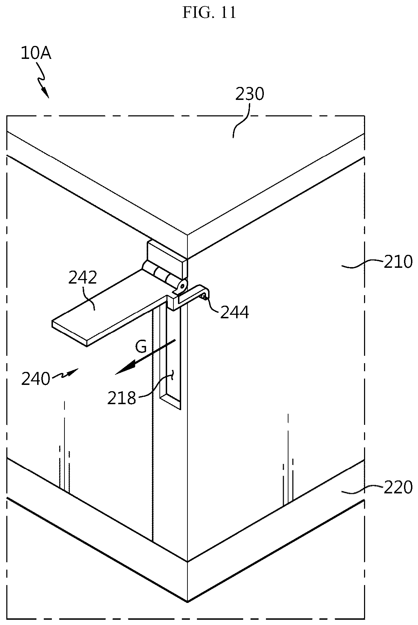

FIG. 11 is a diagram illustrating the gas discharge state of the battery pack 10A shown in FIG. 10.

As shown in FIG. 11, if the internal pressure of the gas passage becomes higher than the external pressure of the battery pack 10A due to high-pressure and high-temperature venting gas generated from the battery cell accommodated in the battery pack 10A, the swing door 242 may swing upward by the air or gas discharged from the gas outlet 218 to open the gas outlet 218, so that the venting gas G may be discharged through the open gas outlet 218.

In this case, the stopper 244 may limit the swing angle of the swing door 242 to control the venting gas G not to be headed upward.

In addition, immediately after the discharge of the venting gas G is completed, if the internal pressure of the gas passage becomes lower than the external pressure of the battery pack 10A, the swing door 242 may swing downward to close the gas outlet 218, thereby preventing oxygen from rapidly flowing into the battery pack 10A and, as a result, suppressing ignition or explosion of the battery pack 10A.

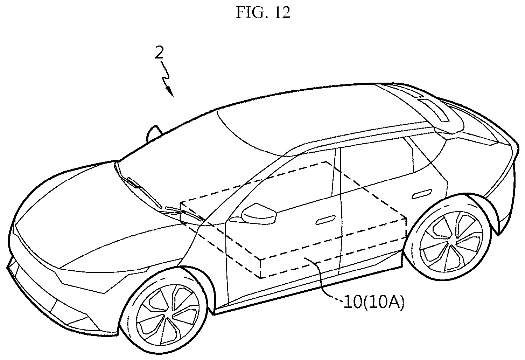

FIG. 12 illustrates a vehicle 2 according to an embodiment of the present disclosure.

As shown in FIG. 12, the vehicle 2 according to an embodiment of the present disclosure may include one or more battery packs 10 or 10A according to the various embodiments described above. In this case, the battery pack 10 or 10A may provide electrical energy required for various operations of the vehicle 2.

For reference, the battery pack 10 or 10A according to the present disclosure may be applied to ESSs (Energy Storage Systems), as well as various electric devices or electric systems, in addition to vehicles.

As described above, according to the present disclosure, since multiple battery cells capable of being charged and discharged are accommodated directly inside the pack housing of the battery pack, it is possible to reduce the weight and volume of the battery pack and improve the energy density thereof.

In addition, since the side frame of the pack housing has a gas passage therein, and since a window communicating with the gas passage is provided on one surface adjacent to the accommodation space accommodating the battery cells, it is possible to discharge the gas generated from the battery cells inside the accommodation space in the intended direction, thereby preventing chain thermal runaway or ignition of other battery cells and improving the safety of the battery pack.

In addition, the base frame of the pack housing has a pocket configured to collect particles such as dust and ash emitted from the battery cells accommodated in the accommodation space, thereby preventing obstruction of the gas passage or occurrence of fire due to the particles and further improving the safety of the battery pack.

In addition, since a capture groove is provided inside the side frame to capture particles flowing into the gas passage, it is possible to prevent high-temperature particles from being discharged outside the battery pack.

In addition, the base frame has a cooling medium path through which the cooling medium moves and constitutes the accommodation space, so that a heat sink separately installed inside the pack housing may be omitted, thereby simplifying the structure of the battery pack and reducing manufacturing costs.

Furthermore, it goes without saying that the embodiments according to the present disclosure are able to solve various technical problems other than those mentioned in this specification in the relevant technical field as well as related technical fields.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

## Claims

1. A battery pack comprising:
a plurality of battery cells; and
a pack housing having an accommodation space configured to accommodate the plurality of battery cells,
wherein the pack housing comprises:
a side frame constituting a side wall of the accommodation space, having a gas passage therein, and having at least one window, which communicates with the gas passage, provided on a surface adjacent to the accommodation space; and
a base frame constituting a bottom of the accommodation space and having at least one pocket configured to collect particles emitted from the plurality battery cells accommodated in the accommodation space.

2. The battery pack according to claim 1,
wherein each of the plurality of battery cells comprises an electrode lead at an end facing the side frame, and
wherein the at least one window of the side frame is provided at a position facing the electrode lead.

3. The battery pack according to claim 1,
wherein the at least one pocket of the base frame is provided below the at least one window.

4. The battery pack according to claim 3,
wherein the side frame further has a guide surface configured to guide particles emitted from the plurality battery cells to the pocket.

5. The battery pack according to claim 1,
wherein the pack housing further comprises partitions configured to divide the accommodation space into a plurality of independent sub-accommodation spaces, and
wherein the side frame comprises a plurality of windows corresponding to the plurality of sub-accommodation spaces.

6. The battery pack according to claim 5,
wherein the base frame comprises a plurality of pockets corresponding to the plurality of sub-accommodation spaces.

7. The battery pack according to claim 1,
wherein the base frame further comprises a cooling medium path through which a cooling medium moves.

8. The battery pack according to claim 1,
wherein the side frame further comprises a capture groove provided below the gas passage and configured to capture particles flowing into the gas passage through the at least one window.

9. The battery pack according to claim 8,
wherein the side frame further comprises a plurality of capturing fins protruding from the inner surface of the capture groove at regular intervals and configured to capture particles flowing into the gas passage.

10. The battery pack according to claim 9,
wherein the plurality of capturing fins protrudes to be inclined in the direction of movement of venting gas, which is discharged from the plurality batterys cell and moves along the gas passage.

11. The battery pack according to claim 1,
wherein the side frame further comprises a gas outlet configured to discharge venting gas moving along the gas passage to the outside of the pack housing.

12. The battery pack according to claim 11,
wherein the pack housing further comprises a gas valve configured to open the gas outlet if internal pressure of the gas passage is higher than external pressure of the battery pack and close the gas outlet if the internal pressure of the gas passage is equal to or lower than the external pressure.

13. A vehicle comprising the battery pack according to any one of claims 1 to 12.
